# EUROPEAN PATENT APPLICATION

(11) **EP 1 914 995 A1**
(43) Date of publication of application: **23.04.2008**
(21) Application number: 07110255.2
(22) Date of filing: 14.06.2007
(51) Int. Cl.: H04N 7/26

(54) **Method and device for estimating motion vectors in a field containing at least one static area**

(30) Priority: 22.06.2006 EP 06300715
(71) Applicant: Thomson Licensing, 92100 Boulogne-Billancourt (FR)
(72) Inventor: Kervec, Jonathan, 92648 Boulogne cedex (FR); Blonde, Laurent, 92648 Boulogne cedex (FR); Doyen, Didier, 92648 Boulogne cedex (FR)
(74) Representative: Le Dantec, Claude

(57) **Abstract**

The invention concerns a device and a method to estimate motion vectors for a video field comprising at least one static area. The method comprises the steps of:
- estimating (E2) motion vectors for each pixel of said video field in order to obtain a motion vector for each pixel of said field,
- determining (E3) the static areas in said video field,
- determining (E4), around the static areas, a transition area,

According to the invention the method comprises a step of filtering (E5) the motion vectors associated with the pixels of said transition area.

## Description

The invention concerns a method and a device to estimate motion vectors in a video frame comprising at least one static area.

The goal of a motion estimator applied on a video sequence is often to define motion vector fields between successive video frames.

Once these motion vector fields are defined they can be used in many different ways :
- temporal video interpolation (video scanning conversion),
- de-interlacing, noise reduction (picture improvement),
- ...

In most of these previous cases it is necessary to combine the motion estimation with a static area detection: indeed, this last detection could easily take into account the noise video level and integrate a temporal recursiveness in order to be quite confident in the static areas detected.
We have then, two types of results :
- Motion vector field,
- Static areas map (equivalent to zero motion in the previous field)
and we have to combine both of them before applying video processing (interpolation, de-interlacing, ...)

One problem faced with such an approach is to combine in an efficient manner the results of the static area detection and the motion vector fields obtained.
Moreover, the problem is particularly difficult to solve on the static area borders. Motion vectors in this area are certainly disturbed as they are defined in covered or discovered areas where a matching between two successive frames is not found.

The invention proposes a method that modifies the motion vector fields in transition areas close to the static areas.
Japanese patent application JP8-149421 describes a method for replacing the vectors in a transition area by zero motion vectors. However, this application does not describe how to obtain a smooth transition between the static area and the pixels in movement. Moreover, the transition area is linked to the amplitude of the motion vectors.

To this end, the invention concerns a method to estimate motion vectors for a video field comprising at least one static area, said method comprising the steps of:
- estimating motion vectors for each pixel of said video field in order to obtain a motion vector for each pixel of said field,
- determining the static areas in said video field,
- determining, around the static areas, a transition area.
   According to the invention, the method comprises the step of filtering the motion vectors associated with the pixels of said transition area.
   According to a preferred embodiment, the transition area is determined by applying dilatation morphological operators to the static area.
   Preferentially, the filtering consists in applying a linear horizontal filtering followed by a linear vertical filtering on the motion vectors of said transition area.
   According to a second embodiment, the step of filtering consists in replacing the motion vectors of the static area by zero motion vectors.
   The invention concerns also a device to estimate motion vectors for a video field comprising at least one static area, said device comprising
- means for estimating motion vectors for each pixel of said video field in order to obtain a motion vector for each pixel of said field,
- means for determining the static areas in said video field,
- means for determining, around the static areas, a transition area,
Characterized in that said device comprises means for filtering the motion vectors associated with the pixels of said transition area.

According to a preferred embodiment, the device contains means for applying a dilatation operation to the static area in order to obtain the transition area.

Preferentially, the device comprises means for applying a linear horizontal filtering followed by a linear vertical filtering to the motion vectors of the pixels comprised in said transition area.
According to another embodiment, the device comprises means for replacing the motion vectors of the static area by zero motion vectors.

Other characteristics and advantages of the invention will appear through the description of a non-limiting embodiment of the invention, which will be illustrated, with the help of the enclosed drawings.
- Figure 1 represents an overview of the problem of the prior art,
- Figure 2 represents a device according to an embodiment of the invention.
- Figure 3 represents the different areas obtained after the transition area determination,
- Figures 4a and 4b represent the horizontal filtering performed,
- Figures 5a and 5b represent the vertical filtering performed.
- Figure 6 represents an embodiment of the method according to the invention.

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.
Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.
Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.
In the following detailed description of the embodiments, reference is made to the accompanying drawings that show, by way of illustration, specific embodiments in which the invention may be practices. In the drawings, numbers describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

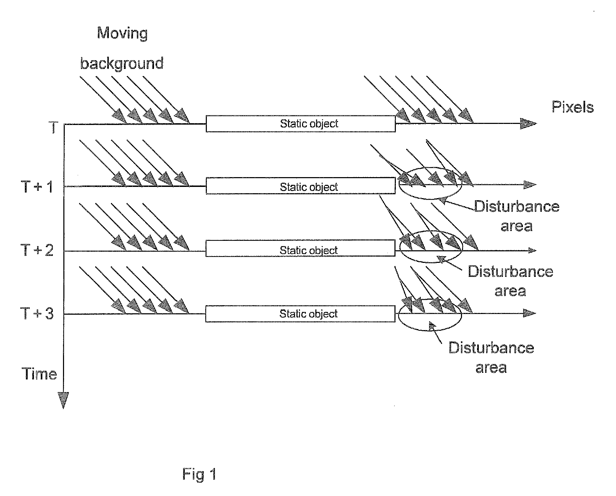

On figure 1, a static object on an image, for instance a logo in an image, is located at the same place on each of the video frame.
On the successive frames T,T+1, T+2, T+3... , the motion vectors on the left side of the logo are correctly evaluated by a motion vector estimation module. However, the motion vectors on the right side are not correctly evaluated, if the global movement direction goes from the left to the right of the frame.

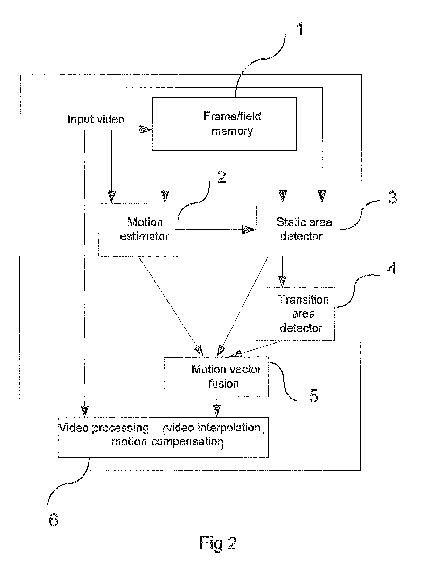

On figure 2 are represented the different modules of a device according to a preferred embodiment of the invention.
A motion estimator module 2 estimates the movement between two fields of the same parity, field at time T-2 and field at time T in a known manner by the man skilled in the art.
The static areas are detected by a static area detector module 3. It consists in detecting the areas which from one field to the next one, or from one frame to the next one, have no movement. The static area detection is done using the luminance information and is carried out on bloc of variable size. The fields/frames are memorized by a field/frame memory 1 which has the capacity of storing several fields/frames. In the following description, the embodiment describes the invention applied to progressive mode and therefore the field/frame memory 1 is a field memory. At least, the field memory 1 needs to store three fields in order to be able to detect the static areas between field at instant T and field at instant T-2.
The static areas are not calculated for each pixel but for 2*2 blocs of pixels, in order to assume some stability. For 2*2 pixels blocs, the error mean rate cannot be higher than 6, threshold value. A binary image is obtained, "1" representing a static pixel, "0" representing a non-static pixel.
In order to avoid isolated pixels considered as static, an erosion operation is performed on the binary image obtained previously. For this purpose, a window centered on the current pixel is moved pixel by pixel on the image. If the number of static pixels in the window is lower than a predefined threshold, the current pixel is considered as being in movement.
According to this preferred embodiment a 3*3 pixels window is chosen.
After the erosion operation, a dilatation operation is performed on the binary image obtained after the erosion operation by a transition area detector 4. For this purpose, a window centered on the current pixel is moved pixel by pixel on the image. If the number of static pixels in the window is higher or equal to a predefined threshold, the current pixel is considered as being static. Otherwise it is considered as being in movement. According to the size of the window and to the threshold, this dilatation can be more or less high around the static area.
According to this preferred embodiment a 3*3 pixels window is chosen.

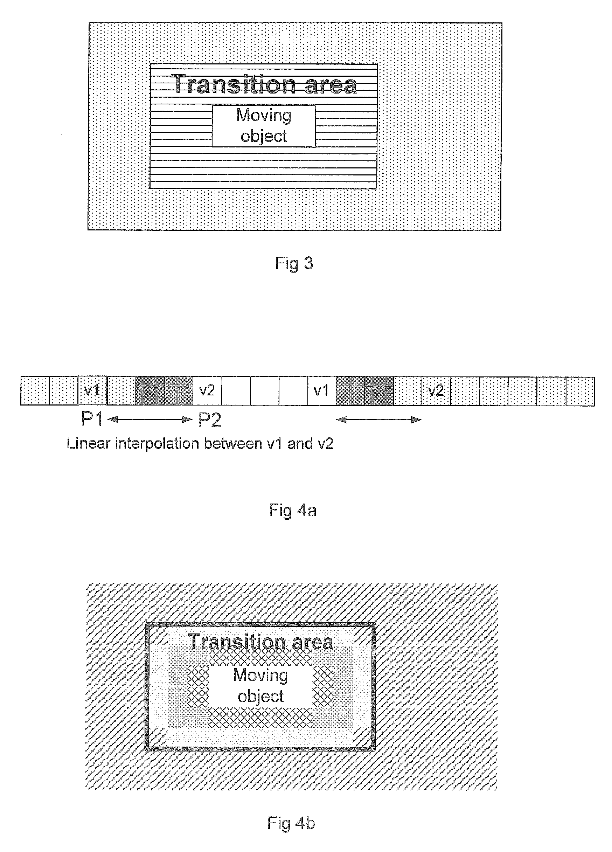

Thus a transition area is obtained thanks to this dilatation operation around the static area as shown on figure 3.
In this transition area, the calculated motion vectors are not in line with the movement of the image and therefore do not represent the real movement of the pixels of this area.
Therefore, according to the invention, the movement vectors of the pixels in this area are modified in order to have less disturbed motion vectors by a motion vectors fusion module 5.

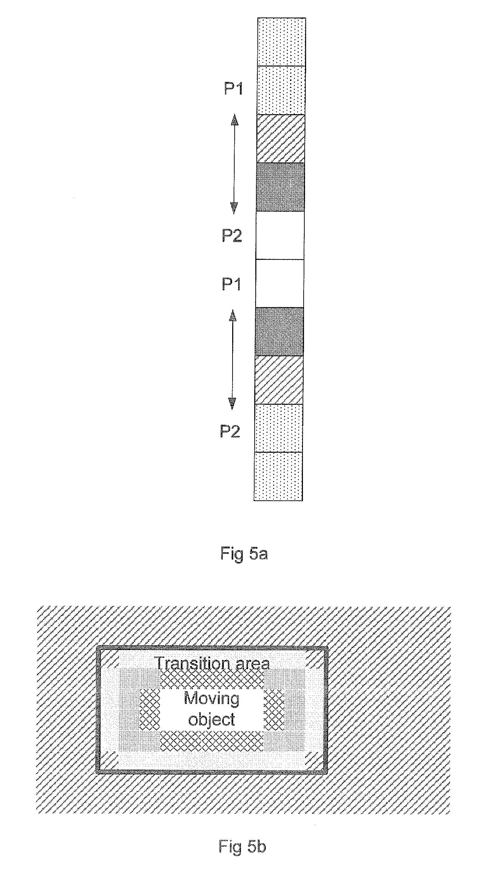

In a preferred embodiment, the vectors in this area are filtered in order to get a smooth transition from the static area to the moving area. For this purpose, a linear filter is applied combining a linear horizontal filtering and an horizontal linear filtering.
In order to perform the horizontal filtering, the current frame is scanned line by line as shown on figure 4a.
On the line of the current pixel, the motion vector V1 and the position P1 of the last pixel not in the transition area is memorized as well as the motion vector V2 and the position P2 of the first pixel not in the transition area. A linear filtering of the motion vectors of the pixels located between positions P1 and P2 is done, the value of the motion vectors of the pixels being higher for the pixel close to the highest value and decreasing linearly until the lowest value. Figure 4b shows the obtained motion vectors in the transition area.
After the horizontal filtering, a vertical filtering is also applied as shown on figure 5a. A vertical filtering requests much more memory capacities as such a filtering requests to memorize several lines of data.
The same interpolation is done for vertical filtering as done for horizontal filtering.
As shown on figure 5b, the resulting motion vectors for the pixels in the transition area are modified so that they decrease linearly from a high value until a low value. Therefore, a smooth transition is obtained between static areas and moving areas of the frame.

Once the new motion vectors for the transition area are obtained, they can be used for applications such as video processing.
The video processing module 6 can be motion compensation oriented or video interpolation oriented.

In another embodiment, the motion vectors of the transition area are replaced by zero motion vectors.

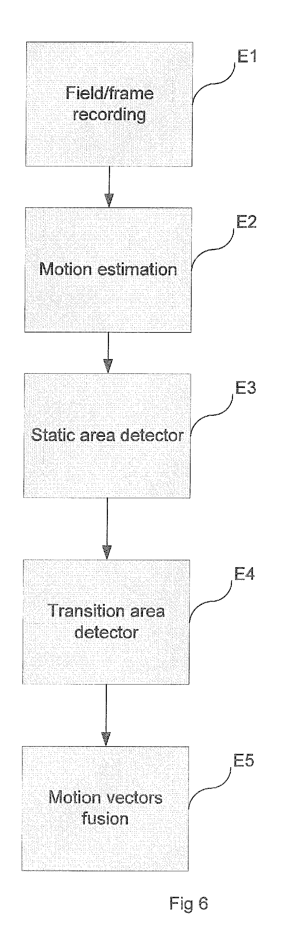

Figure 6 illustrates an embodiment of a method according to the invention. Such a method can be put into practice in the form of a computer program product in a device such as a set-top box or any digital device. The different steps described below are not described in details as they are similar to the description of figure 2 when referring to the device according to an embodiment of the invention.
In a step E1, the fields are stored in a memory, for instance in the form of a random access memory. At least three consecutive fields have to be stored as the motion estimation is done on fields of the same parity.
In a step E2, motion estimation is carried on based on these fields of same parity. Motion estimation of field at instant T is thus evaluated.
In a step E3, pixels having "0" motion, therefore considered as belonging to a static area, are determined. For this, isolated pixels having "0" motion vectors are excluded by performing an erosion operation on the pixels.
In a step E4, transition areas around the static areas are determined by performing a dilation operation around the static areas.
In a step E5, the motion vectors of the pixels in the transition area are filtered in order to obtain a smooth transition between the vectors in the static area and the vectors of the moving pixels of the field.

This description was based on the progressive mode. However, the invention can also be applied to the interlaced mode. In this mode the field/frame memory 1 is a frame memory storing at least two frames in order to perform the motion estimation.

## Claims

1. Method to estimate motion vectors for a video field comprising at least one static area, said method comprising the steps of:
- estimating (E2) motion vectors for each pixel of said video field in order to obtain a motion vector for each pixel of said field,
- determining (E3) the static areas in said video field,
- determining (E4), around the static areas, a transition area,
**characterized in that** it comprises a step of
- filtering (E5) the motion vectors associated with the pixels of said transition area.

2. Method according to claim 1 **characterized in that** the transition area is determined by applying dilatation morphological operators to the static area.

3. Method according to claim 2 **characterized in that** the filtering consists in applying a linear horizontal filtering followed by a linear vertical filtering on the motion vectors of said transition area.

4. Method according to claim 3 **characterized in that** the step of filtering consists in replacing the motion vectors of the static area by zero motion vectors.

5. Device to estimate motion vectors for a video field comprising at least one static area, said device comprising
- means (2) for estimating motion vectors for each pixel of said video field in order to obtain a motion vector for each pixel of said field,
- means (3) for determining the static areas in said video field,
- means (4) for determining, around the static areas, a transition area,
**characterized in that** it comprises means (5) for filtering the motion vectors associated with the pixels of said transition area.

6. Device according to claim 5 **characterized in that** it contains means for applying a dilatation operation to the static area in order to obtain the transition area.

7. Device according to one of claims 5 or 6 **characterized in that** it comprises means for applying a linear horizontal filtering followed by a linear vertical filtering to the motion vectors of the pixels comprised in said transition area.

8. Device according to claim 5 **characterized in that** it comprises means for replacing the motion vectors of the static area by zero motion vectors.
